# EUROPÄISCHE PATENTSCHRIFT

(11) **EP 2 832 667 B1**
(45) Veröffentlichungstag und Bekanntmachung des Hinweises auf die Patenterteilung: **23.08.2017**
(21) Anmeldenummer: 14175374.9
(22) Anmeldetag: 02.07.2014
(51) Int. Cl.: B65G 57/24

(54) **Verfahren und Vorrichtung zum Stapeln und/oder Palettieren von Gebinde- oder Stückgutlagen**
Method and device for stacking and/or palletizing piece goods or goods in containers
Procédé et dispositif d'empilement et/ou de palettisation de couches de paquets ou de pièces

(30) Priorität: 31.07.2013 DE 102013108231
(43) Veröffentlichungstag der Anmeldung: 04.02.2015
(73) Patentinhaber: Krones Aktiengesellschaft, 93073 Neutraubling (DE)
(72) Erfinder: Beer, Erhard, 93073 Neutraubling (DE); Schweighofer, Georg, 93073 Neutraubling (DE); Osterhammer, Martin, 93073 Neutraubling (DE)
(74) Vertreter: Benninger, Johannes

(56) Entgegenhaltungen:
- WO-A1-2013/038102
- NL-A- 8 801 528
- US-A- 4 927 318

## Beschreibung

Die vorliegende Erfindung betrifft ein Verfahren zum Stapeln und/oder Palettieren von Gebinde- oder Stückgutlagen.

Für die Stapelung oder Palettierung von Gebinden, Stückgütern oder Paketen können Beladestationen wie bspw. Jalousie- oder sog. Plattengreiferköpfe o. dgl. eingesetzt werden. Ein solcher Greiferkopf, der als Beladestation dienen kann, geht bspw. aus der DE 10 2010 048 524 A1 hervor. Hierbei werden üblicherweise vollständige Lagen nacheinander von einer Förderstrecke oder einer definierten Übergabestelle mit der Beladeeinrichtung aufgenommen und anschließend auf einem vorgesehenen Ablageplatz wie bspw. einer Palette o. dgl. gestapelt werden. Da das Ablegen der Lagen aufgrund der sich öffnenden Rollböden oder Plattenböden mit Relativbewegungen und Kippbewegungen der einzelnen Artikel oder Stückgüter verbunden ist, kann es vorkommen, dass die Lagen nicht mit der gewünschten Exaktheit abgelegt und/oder Lücken zwischen den einzelnen Artikeln oder Stückgütern der Lage entstehen können, was beim Bilden höherer Lagenstapel stören kann. Um diese ungenaue Ablage zu vermeiden, können die Lagen nach der Ablage auf der Palette bzw. auf einem bereits bestehenden Stapel zentriert werden, bspw. mittels geeigneter Zentriereinrichtungen, die an die Beladeeinheit angebaut sein können. Alternativ hierzu können auch Zentrierungen verwendet werden, die über ein eigenes Hubwerk verfügen und auf eine Hubbewegung der Beladestation abgestimmt werden können. Solche Zentriereinrichtungen müssen vertikal so positioniert werden, dass sie, wenn die Beladeeinheit in Abgabeposition steht, die Zentrierungen mittig zwischen den beiden obersten Lagen wirken und so das exakte Fluchten und/oder Einrasten der beiden Lagen ineinander sicherstellen. Diese Zentriereinrichtungen können auch dazu verwendet werden, um Lagen nach dem Ablegen auf der Palette nochmals auszurichten.

Die DE 10 2009 025 942 A1 offenbart eine Beladeeinrichtung, welche die oben genannten Nachteile vermeiden soll. Die Einrichtung umfasst einen Plattengreiferkopf mit seitlich verschiebbaren Tragböden, denen jeweils Vibrationseinrichtungen zugeordnet sind, die insbesondere beim Ablegen und Stapeln von Artikeln, Stückgütern oder Gebinden für eine exaktere Einhaltung der geordneten Lagepositionen der einzelnen Teile zueinander sorgen sollen. Ohne zusätzliche Zentriereinrichtungen, welche Lücken zwischen den Artikeln, Stückgütern oder Gebinden durch deren Zusammenschieben schließen, kann allerdings nicht unter allen Umständen gewährleistet werden, dass die abgelegten Lagen exakt zueinander fluchten.

Ein Lagenbildungsverfahren für Artikel, Stückgüter oder Gebinde ist bspw. in der DE 10 2011 080 812 A1 offenbart, das allerdings keine gesonderten Maßnahmen gegen leichtes Verrutschen oder eine Lückenbildung einer bereits formatierten stapelfähigen Artikel-, Stückgut- oder Gebindelage vorsieht, nachdem diese auf einem Stapelplatz abgelegt wurden.

Unter anderem hat es sich bei den bekannten Zentrierverfahren als nachteilig erwiesen, dass bei Verwendung zusätzlicher Zentrierungen die Gefahr von Kollisionen zwischen der Beladestation und den Einrichtungen für einen Palettentransport beim Ablegen der ersten Lagen auf der Palette steigen kann. Oftmals müssen deshalb zusätzliche Hubeinrichtungen im Bereich der Palettentransporteinrichtungen zur Vermeidung dieser Kollisionsgefahren eingesetzt werden. Zudem erhöht sich das Gewicht der Beladeeinheit durch angebaute Zentriereinrichtungen, was zu einer Reduzierung der Nutzlast der Beladeeinheit führt. Wenn unterschiedliche Lagenmaße und -höhen verarbeitet werden sollen, so muss beim Wechseln der Sorte die Zentrierung auf das neue Lagenmaß eingestellt und die vertikale Position unterhalb der Beladeeinheit eingerichtet werden.

Durch NL 8801528 A ist ein Verfahren zum Stapeln und/oder Palettieren von Druckerzeugnissen nach dem Oberbegriff des Anspruchs 1 bekannt, bei dem vollständige Lagen nacheinander von einer Förderstrecke mittels einer Beladeeinrichtung aufgenommen und zu einem Ablageplatz bewegt werden. Anschließend wird die vollständige Lage am Ablageplatz gestapelt, indem die Beladeeinrichtung unter der Lage zurückgezogen wird, wobei die Lage von einem oberhalb der auf der Beladeeinrichtung stehenden Lage um eine horizontale Schwenkachse verschwenkbaren Schubelement einer Gruppe von insgesamt vier allseitig um den Ablageplatz herum angeordneten und in ihrer vertikalen Bewegung mit der Beladeeinrichtung gekoppelten Schubelementen daran gehindert wird, mit der Beladeeinrichtung zurückgezogen zu werden, und so die Lage abgelegt wird. Anschließend wird die nunmehr oberste Lage durch seitliche Zustell- und/oder Schiebebewegungen aller Schubelemente zentriert. Anschließend können auf dem Ablageplatz abgelegte(n) eine oder mehrere übereinander befindliche vollständige Lage(n) durch seitliche Zustell- und/oder Schiebebewegungen der Schubelemente in eine definierte Position auf dem Ablageplatz und/oder zur Positionierung gegenüber einer zuvor gestapelten Gebinde- oder Stückgutlage aneinander geschoben und nachzentriert werden. In einer alternativen Ausgestaltung können durch einmalige Zentrierung mittels seitlicher Zustell- und/oder Schiebebewegungen erhöhter Schubelemente gleichzeitig eine neu abgelegte Lage und eine zuvor abgelegte Lage gleichzeitig zentriert werden.

Durch WO 2013/038102 A1 ist ein höhenbeweglicher Jalousiekopf zum Ablegen vollständiger Gebinde- oder Stückgutlagen an einem Ablageplatz bekannt. In dem Jalousiekopf sind ein vorderer und ein hinterer Anschlag vorgesehen, welche verhindern, dass beim Zurückziehen der Jalousien die Lage auseinandergezogen wird.

Eine Aufgabe der Erfindung ist es, ein einfach handhabbares und kostengünstiges Verfahren zum Stapeln und/oder Palettieren von Gebinde- oder Stückgutlagen zu entwickeln, welches eine effektive, exakte und zuverlässige Zentrierung und Ausrichtung von zu stapelnden Lagen während oder unmittelbar nach ihrer Ablage auf einer Palette oder der Oberseite eines dort abgelegten Stapels von Gebinde- oder Stückgutlagen ermöglicht.

Dieses Ziel der Erfindung wird mit dem Gegenstand des Anspruchs 1 erreicht, wobei sich Merkmale vorteilhafter Weiterbildungen der Erfindung aus den abhängigen Ansprüchen ergeben. Zur Erreichung des Ziels schlägt die vorliegende Erfindung ein Verfahren zum Stapeln und/oder Palettieren von Gebinde- oder Stückgutlagen vor, bei dem vollständige Lagen nacheinander von einer Förderstrecke und/oder einer Übergabestation mittels einer Beladeeinrichtung aufgenommen und durch seitliche Zustell- und/oder Schiebebewegungen vorzentriert und anschließend auf einem vorgesehenen Ablageplatz gestapelt werden. Das Verfahren sieht vor, dass in einer sich an die Vorzentrierung anschließenden Prozessphase die Beladeeinrichtung in einer Hub- und/oder Verschiebebewegung zu dem vorgesehenen Ablageplatz bewegt wird. Nach dem Ablegen der Gebinde- oder Stückgutlagen sieht das Verfahren ein Nachzentrieren der Gebinde oder Stückgüter der auf dem Ablage- oder Stapelplatz abgelegten Gebinde- oder Stückgutlage vor. Dieses Nachzentrieren erfolgt durch erneute seitliche Zustell- und/oder Schiebebewegungen von innerhalb der Beladeeinrichtung angeordneten Schubelementen, wodurch die auf dem Ablageplatz abgelegte(n) eine oder mehrere übereinander befindliche vollständige Lage(n) in eine definierte Position auf dem Ablageplatz und/oder zur Positionierung gegenüber einer zuvor gestapelten Gebinde- oder Stückgutlage aneinander geschoben und nachzentriert werden. Normalerweise erfolgt das Nachzentrieren in einer Weise, dass dem Ablegen der Lage die Beladestation mit den innerhalb eines Rahmens o. dgl. angeordneten Zentrier- oder Schubelementen auf ein Niveau abgesenkt wird, das unterhalb des zuvor erreichten Niveaus liegt, das zum Ablegen der Lage angefahren wurde.

Das erfindungsgemäße Verfahren dient dem passgenauen und exakt übereinander fluchtenden Stapeln und/oder Palettieren von Gebinde- oder Stückgutlagen, die mit Hilfe des Verfahrens lückenlos und ohne seitlichen Versatz übereinander gestapelt bzw. palettiert werden können. Bei dem Verfahren werden jeweils einzelne Lagen oder wahlweise auch jeweils zwei oder mehr übereinander befindliche vollständige Lagen nacheinander (einzeln) von einer Förderstrecke und/oder einer Übergabestation mittels einer Beladeeinrichtung - dies kann bspw. ein Jalousiegreiferkopf, ein Plattengreiferkopf o. dgl. mit z.B. zweiteiligen, die Lage durch beidseitiges seitliches Öffnen nach unten freigebbaren Beladeböden sein - aufgenommen und durch allseitige Zustellbewegungen von beweglichen Zentrierleisten oder Zentrierelementen, wahlweise auch Zentrierstempeln o.ä., vorzentriert und anschließend auf einem vorgesehenen Ablageplatz gestapelt, nachdem zuvor die Zentrierleisten auseinander bewegt und die eine oder mehrere übereinander befindliche vollständige Lage(n) freigegeben wird/werden, wonach die auf dem Ablageplatz abgelegte(n) eine oder mehrere übereinander befindliche vollständige Lage(n) durch erneute Zustellbewegungen der in der Beladeeinrichtung angeordneten beweglichen Zentrierleisten zur Herstellung einer exakten vertikalen Fluchtung mit einer vorher abgelegten oder nachfolgenden Lage oder Positionierung der einzelnen Gebinde oder Stückgüter der abgelegten Lage aneinander geschoben und nachzentriert werden.

Das Verfahren ermöglicht es insbesondere, die mittels der Beladeeinrichtung abgelegten und gestapelten Lagen mit den Gebinden oder Stückgütern durch das Nachzentrieren annähernd lückenlos aneinander zu schieben. Auf diese Weise können die Gebinde oder Stückgüter einer mittels der Beladeeinrichtung abgelegten Gebinde- oder Stückgutlage beim Nachzentrieren in eine weitgehend exakte vertikale Fluchtung mit einer vorher abgelegten oder nachfolgenden Gebinde- oder Stückgutlage gebracht und bspw. mit einer vorher abgelegten Gebinde- oder Stückgutlage verrastet, d.h. in Formschluss gebracht werden. Wenn im vorliegenden Zusammenhang von einem Verrasten aufeinander gestapelter Gebinde- oder Stückgutlagen die Rede ist, so ist damit eine formschlüssige Passung in vertikaler Richtung gemeint, welche die aufeinander gestapelten Gebinde oder Stückgüter an einem Verrutschen in horizontaler Richtung hindern kann. Beispiele hierfür sind Getränkekästen, die aufeinander gestapelt werden können und hierbei fluchtend und in formschlüssiger Verbindung mit ihren Unterseiten in eine rahmenartige Oberseite eines darunter befindlichen Kastens einrasten können, so dass eine stabile Stapelung erreicht werden kann. Deshalb ist eine solche formschlüssige Stapelung besonders dann von Vorteil, wenn es sich bei den Gebinden oder Stückgütern um Getränkekästen o. dgl. stapelbare Güter handelt, bei denen ein vertikales Verrasten im Hinblick auf die Stabilität der gestapelten und/oder palettierten Lagenschichten besonders wichtig ist.

Wahlweise können die Zentrierelemente zum Nachzentrieren der abgelegten Gebinde- oder Stückgutlagen während des Eingriffes an den Außenseiten einer abgelegten Lage an deren unterer Kante angreifen und gleichzeitig eine obere Kante der darunter befindlichen Lage erfassen, womit gewährleistet werden kann, dass solche Gebinde oder Stückgüter, die mit ihren Unterseiten einen Formschluss mit den Oberseiten darunter befindlicher Gebinde oder Stückgüter erzeugen können, zuverlässig verrasten und in den gewünschten Formschluss gebracht werden. Bei allen Varianten des erfindungsgemäßen Verfahrens wird die Beladeeinrichtung nach dem Ablegen der Gebinde- oder Stückgutlage, bspw. nach dem Öffnen eines Rollenbodens eines Jalousiegreiferkopfes oder eines Plattenbodens eines Plattengreiferkopfes, um einen geringen Betrag vertikal nach unten gesenkt, bis sich die Zentriereinrichtungen oder Zentrierleisten in der richtigen Höhe befinden, entweder ungefähr im Bereich der horizontalen Trennfuge zwischen den aufeinander gestapelten Lagen oder oberhalb dieser Trennfuge, wenn z.B. nur die soeben abgelegte Lage zentriert und die Lücken zwischen den Artikeln, Gebinden oder Stückgütern geschlossen werden sollen. Das beschriebene, zumindest geringfügige Absenken erfolgt u.a. deshalb, weil ein Zentrieren im unteren Bereich bzw. Drittel der Gebinde oder Stückgüter - dies können bspw. Getränkekästen aus Kunststoff sein, die einrastend übereinander stapelbar sind - wesentlich sinnvoller ist als nur im oberen Bereich, insbesondere aufgrund der Kippneigung der einzelnen Kästen, wenn an deren oberem Rand zentriert werden soll. Zudem wird bei dem Ablegen der Lage die Zentrierung nicht geöffnet, so dass ein Nachzentrieren an gleicher Stelle womöglich nicht denselben Effekt liefern würde wie ein Nachzentrieren unterhalb dieses Niveaus. Demzufolge sieht eine Variante des erfindungsgemäßen Verfahrens vor, dass die Beladeeinrichtung vor dem Nachzentrieren zumindest soweit abgesenkt wird, dass die mittels der Beladeeinrichtung abgelegte Gebinde- oder Stückgutlage mit den nachzentrierenden Zentrier- oder Schubleisten an ihrem unteren seitlichen Rand oder in einem unteren Drittel ihrer Gesamthöhe erfasst wird, wie dies oben anhand der damit erzielten Vorteile erläutert wurde. Wenn die gewünschte Höhe der Beladestation erreicht ist, können die Zentrierleisten oder Zentriereinrichtungen gegeneinander zugestellt werden, bis sie die Außenseiten der Gebinde- oder Stückgutlage erfassen, eventuell vorhandene Lücken zwischen den Gebinden oder Stückgütern dieser Lage durch Gegeneinanderschieben der Gebinde oder Stückgüter schließen und gleichzeitig für ein formschlüssiges Verrasten der aufeinander stehenden Gebinde oder Stückgüter sorgen.

Eine Variante des erfindungsgemäßen Verfahrens sieht vor, dass die in der Beladeeinrichtung angeordneten Schubelemente durch paarweise gegeneinander zustellbare Zentrier- oder Schubleisten gebildet sind, wobei jeweils zwei Paare von gegeneinander zustellbaren Zentrier- oder Schubleisten vorgesehen sind, die ungefähr rechtwinkelig zueinander angeordnet sind. Dabei können jeweils zwei Paare von gegeneinander zustellbaren Zentrier- oder Schubleisten vorgesehen sein, die zum Nachzentrieren jeweils gleichzeitig oder zeitversetzt gegeneinander zugestellt werden können. Sinnvollerweise werden als diese Zentrier- oder Schubleisten bereits vorhandene Führungs- und Schubelemente verwendet, so dass als seitliche Zentrier- oder Schubleisten seitliche Führungsleisten eingesetzt werden können, die mit geeigneten beweglichen Aktoren ausgestattet sind, so dass sie quer zur Einschub- und Förderrichtung der zu stapelnden Lagen beweglich sind und aufeinander zugestellt werden können. Ebenso können als weitere Zentrier- oder Schubleisten bereits vorhandene Schub- und Anschlagbalken eingesetzt werden, die ebenfalls mit geeigneten Aktoren ausgestattet sind, so dass sie in Förderrichtung und gegen die Förderrichtung beweglich sind und aufeinander zugestellt werden können. Diese Schub-, Zustell- und Zentrierbewegungen müssen nicht zwingend in einer Weise erfolgen, dass beide Paare von gegeneinander zustellbaren Zentrier- oder Schubleisten gleichzeitig bewegt werden. Die paarweise erfolgenden Zustellbewegungen können wahlweise auch zeitversetzt erfolgen, was ggf. Vorteile hinsichtlich der Zentriergenauigkeit bieten kann. Darüber hinaus ist es nicht zwingend erforderlich, dass die Zentrier- oder Schubleisten beim Ablegen oder vor dem Ablegen der Lage geöffnet werden. Ggf. können sie auch geschlossen bleiben, wonach das Zentrieren in Form eines leichten Überdrückens durch weitere Zustellbewegungen der Zentrier- oder Schubleisten erfolgen kann.

Die Beladeeinrichtung ist erfindungsgemäss durch einen Jalousie- oder Plattengreiferkopf gebildet sein, der wahlweise nur in vertikaler Richtung oberhalb des Ablageplatzes oder auch zwischen der Förderstrecke und/oder der Übergabestation und dem Ablageplatz bewegt wird. Ein solcher Jalousie- oder Plattengreiferkopf kann bspw. an seiner Oberseite an einem schwenkbaren und/oder heb- und senkbaren Arm aufgehängt sein, während die zu befördernden Gebinde- oder Stückgutlagen seitlich eingeschoben und durch einen sich öffnenden Boden nach unten abgelegt werden können. Der Auflageboden des Jalousie- oder Plattengreiferkopfes dient während des Transports von der Förderstrecke oder der Übergabestelle zum Ablageplatz als Auflageebene für die zu transportierende Stückgut- oder Gebindelage. Außerdem ist ein solcher Auflageboden eines Jalousiegreiferkopfes oder Plattengreiferkopfes in aller Regel dazu geeignet, durch seine beidseitig verfahrbaren Bodenhälften - dies können bspw. jalousieartig bewegliche Rollenböden oder auch horizontal verschiebbare Plattenböden o. dgl. sein, welche durch seitliches Öffnen die darauf stehende Lage nach unten freigeben und dadurch absetzen können - sich nach unten zu öffnen, so dass die Gebinde- oder Stückgutlage in vertikaler Richtung nach unten abgelegt und auf einem Stapelplatz wie einer Palette bzw. auf der Oberseite einer bereits zuvor abgelegten Gebinde- oder Stückgutlage abgelegt werden kann.

Nachfolgend finden sich in zusammengefasster Form weitere Aspekte der vorliegenden Erfindung. So werden zu transportierende und auf einen Stapelplatz zu überführende Gebinde- oder Stückgutlagen nach dem Ablegen auf einer Palette oder einem Stapel- oder Ablageplatz mit Zentriereinrichtungen, die in der Beladestation angeordnet sind, zentriert, was auch als Vorzentrierung bezeichnet werden kann. Eine zusätzliche Zentrierung ist zu diesem Zeitpunkt nicht erforderlich. Ein Höhenunterschied zwischen der Abgabeposition der Gebinde- oder Stückgutlage und der Zentrierposition kann durch eine Vertikalbewegung des Hubwerks der Beladestation ausgeglichen werden. Die Zentriereinrichtungen der Beladestation können mit geeigneten Antrieben ausgestattet sein, bspw. mit elektrischen Antrieben, wahlweise auch mit pneumatischen Antrieben. Durch die variable Ansteuerbarkeit dieser Zentriereinrichtungen können sortenabhänge Einstellungen entfallen, bei denen ansonsten bei Format- oder Größenänderungen der zu handhabenden Gebinde- oder Stückgutlagen eine Umstellung, Neujustierung oder sonstige Anpassung der Vorzentriereinrichtungen erforderlich wäre.

Je nach Stapel- oder Palettiersituation kann es bspw. gewünscht sein, dass die aufeinander gestapelten Lagen ineinander einrasten sollen. Hierbei befindet sich eine zuoberst auf einem Stapel oder dem Ablageplatz abzulegende Lage in der Beladeeinheit und wird dort mit der Zentrierung ausgerichtet, damit sie in dieser vorzentrierten Zuordnung der einzelnen Stücke zueinander abgelegt werden kann. Die Lage wird auf die Palette bzw. auf eine Oberseite einer dort bereits befindlichen Gebinde- oder Stückgutlage abgelegt. Um die Lagen sicher einrasten zu lassen, wird die Beladeeinheit nach dem Ablegen mit geöffneten Zentrierungen soweit abgesenkt, dass die Zentriereinrichtungen auf die beiden obersten Lagen von allen vier Längsseiten einwirken und die Lagen zusammenschieben können. Ist diese Position erreicht so werden die Zentrierungen geschlossen, bis die Lagen eingerastet sind. Anschließend werden die Zentrierungen wieder geöffnet, das Hubwerk angehoben und der Beladeprozess fortgesetzt. Aufgrund der Form der Gebinde oder der Bauform der Beladeeinheit kann es möglich sein, dass die Zentrierposition sowohl nach oben als auch nach unten von der Abgabeposition abweicht.

Je nach gegebener Stapel- oder Palettiersituation kann es bspw. auch gewünscht sein, dass die Gebinde- oder Stückgutlagen erst nach ihrem Ablegen ausgerichtet werden sollen. Die abzulegende Gebinde- oder Stückgutlage befindet sich in der Beladeeinheit und wird dort mit der Zentrierung ausgerichtet, damit sie anschließend in dieser Formation abgelegt werden kann. Die Lage wird anschließend auf die Palette oder auf die Oberseite einer dort bereits befindlichen Gebinde- oder Stückgutlage abgelegt. Beim Ablegen bewegen sich einzelne Gebinde oftmals in unerwünschter, aber unvermeidlicher Weise, was zu Lücken zwischen aneinander stehenden Gebinden oder Stückgütern führen kann. Eine saubere und exakte Palettierung der Gebinde oder Stückgüter kann dadurch beeinträchtigt oder gestört sein. Um die abgelegten Lagen sauber auszurichten, bewegt sich die Beladeeinheit nach dem Ablegen mit geöffneten Zentrierungen soweit, dass die Zentrierungen auf die oberste Lage vierseitig wirken können. Ist diese Position erreicht, so werden die Zentrierungen geschlossen, wodurch die Lage ausgerichtet wird. Anschließend werden die Zentrierungen wieder geöffnet, das Hubwerk mitsamt der Beladestation angehoben und der Beladeprozess fortgesetzt. Aufgrund der Form der Gebinde, der Bauform der Beladeeinheit oder der Art der Verpackung der Gebinde oder Stückgüter kann es möglich sein, dass die Zentrierpositionen sowohl nach oben als auch nach unten von den Abgabepositionen abweichen.

Der besondere Vorteil der Erfindung besteht u.a. darin, dass keine zusätzliche Zentrierung mehr benötigt wird. Auch können sortenabhängige Einstellungen entfallen, wenn die Zentrierungen der Beladestation mit geeigneten Antrieben angesteuert werden. Die Bauform der Beladeeinrichtung kann kompakter ausfallen. Kollisionen mit dem Palettentransport oder anderen Baugruppen können verhindert werden. Auch können mit solchen Beladeeinrichtungen bzw. mit Hilfe des erfindungsgemäßen Verfahrens solche Produkte verarbeitet werden, die nachzentriert werden müssen, ohne dass hierdurch ein bedeutender Mehraufwand verursacht würde.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in schematischer Weise eine Ausführungsvariante einer Stapel-und/oder Palettiervorrichtung 10.
Fig. 2 zeigt die wichtigsten der aufeinander folgenden Verfahrensschritte des erfindungsgemäßen Stapel- und/oder Palettierverfahrens für Gebinde- oder Stückgutlagen.
Fig. 3a zeigt eine erste Prozessphase des erfindungsgemäßen Verfahrens zum Stapeln und/oder Palettieren von Gebinde- oder Stückgutlagen 12.
Fig. 3b zeigt eine nachfolgende zweite Prozessphase des erfindungsgemäßen Verfahrens.
Fig. 3c zeigt eine sich an die Vorzentrierung (Fig. 3b) anschließende Prozessphase.
Fig. 3d zeigt eine weitere Prozessphase des Verfahrens.
Fig. 3e zeigt eine fünfte Prozessphase zum Absenken 44 der Beladeeinrichtung 18 um einen geringen Betrag.
Fig. 3f zeigt eine sechste Prozessphase des Verfahrens.
Fig. 3g zeigt eine siebte Prozessphase des Verfahrens.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Verfahren ausgestaltet sein können und stellen keine abschließende Begrenzung dar.

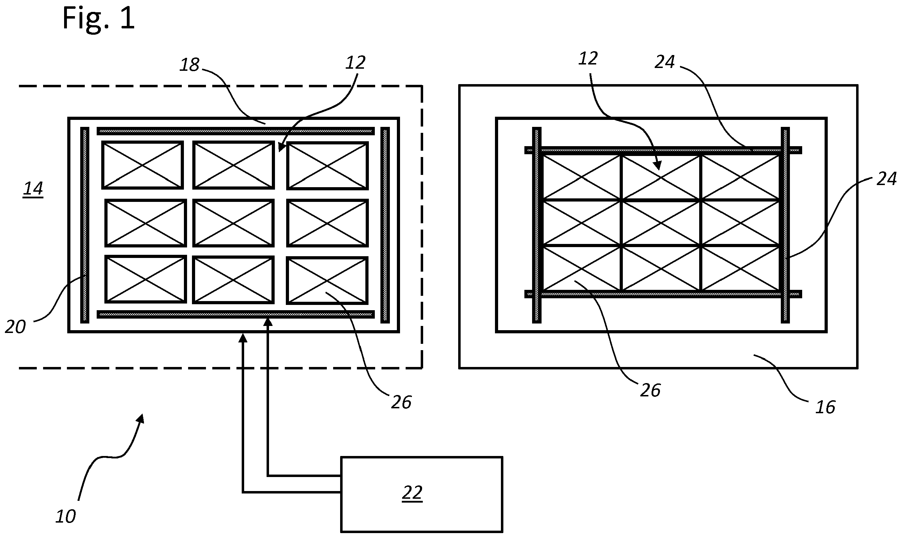

Die Draufsicht der Fig. 1 zeigt in schematischer Weise eine Ausführungsvariante einer Stapel- und/oder Palettiervorrichtung 10, die der Aufnahme von Gebinde- oder Stückgutlagen 12 von einer Förderstrecke und/oder einer Übergabestation 14 und deren Überführung zu einem und ihre Ablage auf einem Ablageplatz 16 dient. Die Vorrichtung 10 umfasst eine schwenk- und/oder höhenbewegliche Beladeeinrichtung 18 zur Übernahme, zum Transport und zur Ablage von vollständigen Gebinde- oder Stückgutlagen 12 auf dem Ablageplatz 16. Der Beladeeinrichtung 18 ist eine Einrichtung 20 zur Vorzentrierung der jeweils von der Übergabestation 14 übernommenen Gebinde- oder Stückgutlage 12 sowie zu deren Nachzentrierung nach der Ablage auf dem Ablageplatz 16 zugeordnet. Außerdem weist die Vorrichtung 10 eine Steuereinrichtung 22 zur positionsabhängigen Steuerung der Beladeeinrichtung 18 sowie der Einrichtung 20 zur Vor- und Nachzentrierung in Abhängigkeit von den jeweiligen Positionen der Beladeeinrichtung 18 auf. Im gezeigten Ausführungsbeispiel ist die Einrichtung 20 zur Vor- und Nachzentrierung durch in der Beladeeinrichtung 18 angeordnete, paarweise gegeneinander zustellbare Zentrier- oder Schubleisten 24 gebildet, wobei jeweils zwei Paare von gegeneinander zustellbaren Zentrier- oder Schubleisten 24 vorhanden sind, die jeweils paarweise rechtwinkelig zueinander angeordnet sind. In der linken Darstellung der Fig. 1 befinden sich die einzelnen Gebinde 26 oder Stückgüter der an der Übergabestation 14 von der Beladeeinrichtung 18 übernommenen Gebinde- oder Stückgutlage 12 in einer Position zueinander, bei der jeweils Lücken zwischen den aneinander grenzenden Gebinden 26 oder Stückgütern vorhanden sein können, verursacht bspw. durch einen vorhergehenden Gebindetransport auf Horizontalfördereinrichtungen sowie ggf. durch einen Lagenbildungsvorgang in einer der Übergabestation vorgeordneten Handhabungsstation. Die insgesamt vier Zentrier- oder Schubleisten 24 der Zentriereinrichtung 20 befinden sich in einem inaktiven Zustand, bei dem sie in maximale paarweise Abstände voneinander auseinander gefahren sind. In der rechten Darstellung der Fig. 1 wurden dagegen die Zentrier- oder Schubleisten 24 jeweils paarweise in horizontalen Schubbewegungen aufeinander zugestellt, so dass die Abstände zwischen den einzelnen Gebinden 26 oder Stückgütern der Gebinde- oder Stückgutlage 12 auf ein Minimum reduziert wurden. Die über den Ablageplatz 16 bewegte Beladeeinrichtung 18 kann somit die in ihre Ablageposition gebrachte Lage 12 in zusammengeschobenem Zustand in ihrer Zielposition abgeben. Die insgesamt vier Zentrier- oder Schubleisten 24 der Zentriereinrichtung 20 befinden sich in der rechten Darstellung der Fig. 1 somit in ihrem aktivierten Zustand, bei dem sie in minimale paarweise Abstände voneinander gebracht sind, soweit dies die dazwischen befindlichen Gebinde 26 oder Stückgüter der Lage 12 erlauben.

Dass der in der Fig. 1 angedeutete Zentriervorgang gemäß der vorliegenden Erfindung ein zweiphasiger Vorgang mit zweimaliger Zentrier- und Zustellbewegung der Zentriereinrichtung 20 ist, wird anhand der nachfolgenden Figuren anhand der aufeinander folgenden Prozessphasen näher verdeutlicht.

Wenn im vorliegenden Zusammenhang von Gebinde- oder Stückgutlagen 12 sowie von Gebinden 26 oder Stückgütern die Rede ist, so ist dies umfassend dahingehend zu verstehen, dass es sich bei diesen genannten Artikeln, die von der Übergabestation 14 in definierter Position auf den Ablageplatz 16 überführt werden, in der Regel um gleichartige und gleich dimensionierte, annähernd quaderförmige Gegenstände oder zumindest um solche Gegenstände mit annähernd definierten Seitenflächen handelt, die in der gezeigten Weise gruppiert, palettiert und gestapelt werden können. Wenn somit in der folgenden Beschreibung der Einfachheit halber nur noch von Gebinden 26 und von Gebindelagen 12 anstelle von Stückgütern oder Stückgutlagen die Rede ist, so ist dies nicht einschränkend zu verstehen. Die verwendeten Begriffe beziehen sich gleichermaßen auf Stückgüter und Stückgutlagen, ohne dass darauf gesondert hingewiesen wird. Weiterhin sei darauf hingewiesen, dass bei der erfindungsgemäßen Vorrichtung 10 die Beladeeinrichtung 18 bspw. durch einen an sich bekannten Jalousie- oder Plattengreiferkopf gebildet sein kann, der zwischen der Förderstrecke und/oder der Übergabestation 14 und dem Ablageplatz 16 beweglich, insbesondere schwenk- und/oder höhenbeweglich angeordnet ist, bspw. durch eine Aufhängung an einem (hier nicht dargestellten) Hubwerk oder durch eine Aufhängung an einem mehrachsig beweglichen Roboterarm o. dgl. Der Jalousie- oder Plattengreiferkopf ist allerdings ergänzt um die integrierte Zentriereinrichtung 20, die insbesondere durch die vier oben erwähnten, in paralleler Richtung zur beweglichen Auflageebene zum Abstellen der zu transportierenden und zu zentrierenden Gebindelage 12 beweglichen Zentrier- oder Schubleisten 24 gebildet sein kann.

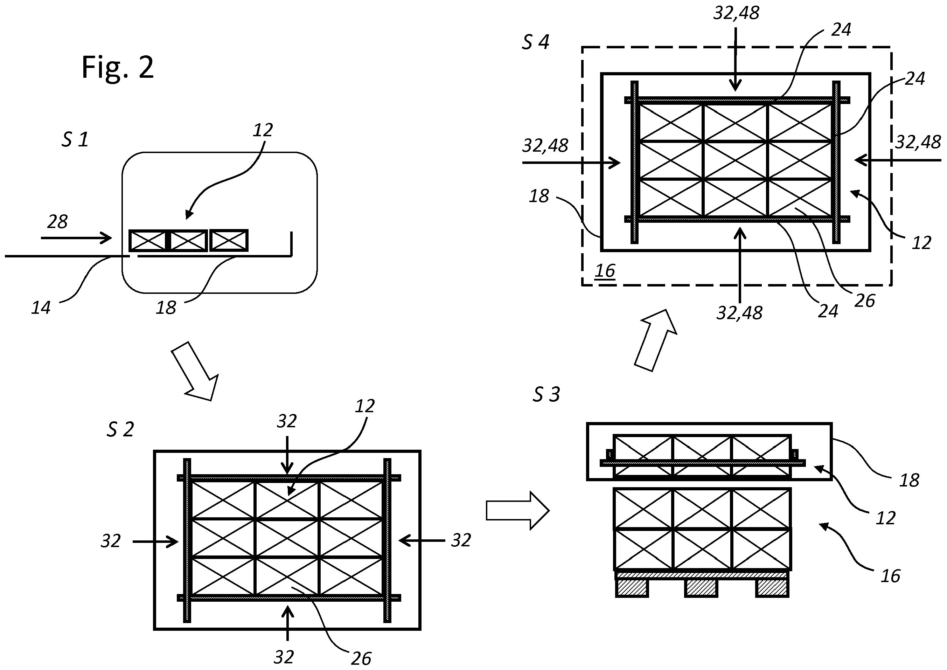

Die schematische Darstellung der Fig. 2 verdeutlicht die wichtigsten der aufeinander folgenden Verfahrensschritte des erfindungsgemäßen Stapel- und/oder Palettierverfahrens für Gebinde- oder Stückgutlagen. Bei diesem Verfahren wird in einem ersten Verfahrensschritt S1 eine vollständige Gebindelage 12 von einer Förderstrecke oder der Übergabestation 14 in die Beladeeinrichtung 18 überführt bzw. mittels der Beladeeinrichtung 18 aufgenommen. Sobald sich die Lage 12 an ihrem Platz in der Beladeeinrichtung 18 - gebildet durch einen Jalousiegreiferkopf oder einen Plattengreiferkopf - befindet, werden in einem zweiten Verfahrensschritt S2 die Gebinde 26 der Lage 12 durch seitliche Zustell- und/oder Schiebebewegungen 32 vorzentriert, wie dies in der Fig. 1 in schematischer Weise gezeigt ist.

Anschließend wird die Lage 12 in einem dritten Verfahrensschritt S3 auf dem vorgesehenen Ablageplatz 16 gestapelt bzw. abgelegt. Dieser Ablageplatz 16 kann bspw. durch eine Palette o. dgl. gebildet sein. Nach dem Ablegen der Gebindelage 12 und vor dem Entfernen der Beladeeinrichtung 18 sieht ein vierter Verfahrensschritt S4 ein Nachzentrieren 48 der Gebinde 26 der auf dem Ablage- oder Stapelplatz 16 abgelegten Gebindelage 12 vor. Dieses Nachzentrieren 48 erfolgt durch erneute seitliche Zustell- und/oder Schiebebewegungen 32 von innerhalb der Beladeeinrichtung 18 angeordneten Schubelementen 24, wodurch die auf dem Ablageplatz 16 abgelegte vollständige Lage 12 in eine definierte Position auf dem Ablageplatz 16 bzw. in fluchtende Position zu einer zuvor gestapelten Gebindelage 12 gebracht werden.

Das in dem Ablaufschema der Fig. 2 in seinen wesentlichen Schritten S1 bis S4 verdeutlichte erfindungsgemäße Verfahren dient dem passgenauen und exakt übereinander fluchtenden Stapeln und/oder Palettieren von Gebinde- oder Stückgutlagen 12, die mit Hilfe des Verfahrens lückenlos und ohne seitlichen Versatz übereinander gestapelt bzw. palettiert werden können. Bei dem Verfahren werden jeweils einzelne Lagen 12 oder wahlweise auch jeweils zwei oder mehr übereinander befindliche vollständige Lagen von einer Förderstrecke und/oder der Übergabestation 14 mittels der Beladeeinrichtung 18, gebildet bspw. durch einen Jalousiegreiferkopf, einen sog. Plattengreiferkopf o. dgl., aufgenommen und durch allseitige Zustellbewegungen von beweglichen Zentrierleisten 24 oder Zentrierelementen, wahlweise auch Zentrierstempeln o.ä., vorzentriert und anschließend auf dem vorgesehenen Ablageplatz 16 gestapelt, nachdem zuvor die Zentrierleisten 24 auseinander bewegt und die eine oder mehrere übereinander befindliche vollständige Lagen 12 freigegeben werden. Anschließend werden die auf dem Ablageplatz 16 abgelegten eine oder mehrere übereinander befindliche vollständige Lagen 12 durch erneute Zustellbewegungen der in der Beladeeinrichtung 18 angeordneten beweglichen Zentrierleisten 24 zur Gewährleistung einer exakten vertikalen Fluchtung mit einer vorher abgelegten oder nachfolgenden Lage 12 oder Positionierung der einzelnen Gebinde 26 oder Stückgüter der abgelegten Lage 12 aneinander geschoben und nachzentriert.

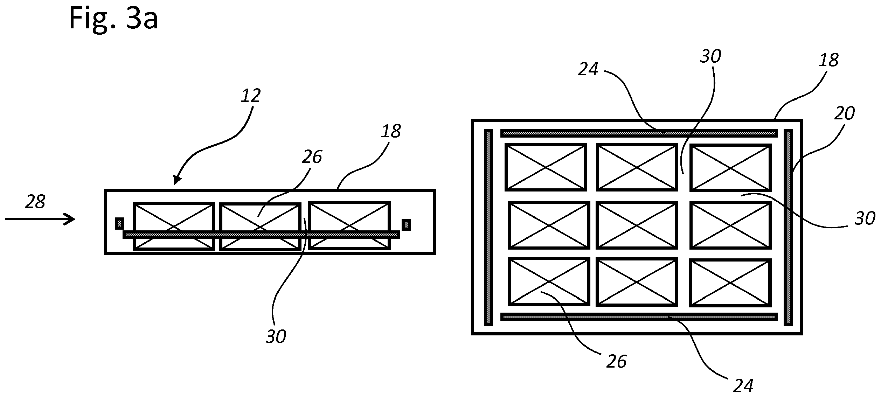

Die Figuren 3a bis 3g verdeutlichen aufeinander folgende Prozessphasen des erfindungsgemäßen Verfahrens zum Stapeln und/oder Palettieren von Gebinde- oder Stückgutlagen 12, wobei hier die unter Bezugnahme auf die Figuren 1 und 2 gemachten obigen Ausführungen noch im Detail ergänzt werden. In allen Figuren 3a bis 3g sind jeweils links schematische Seitenansichten einer Beladeeinrichtung 18 und der darin angeordneten Zentrier- oder Schubleisten 24 dargestellt, während rechts jeweils eine entsprechende Draufsicht der Beladeeinrichtung in der entsprechenden Prozessphase gezeigt ist.

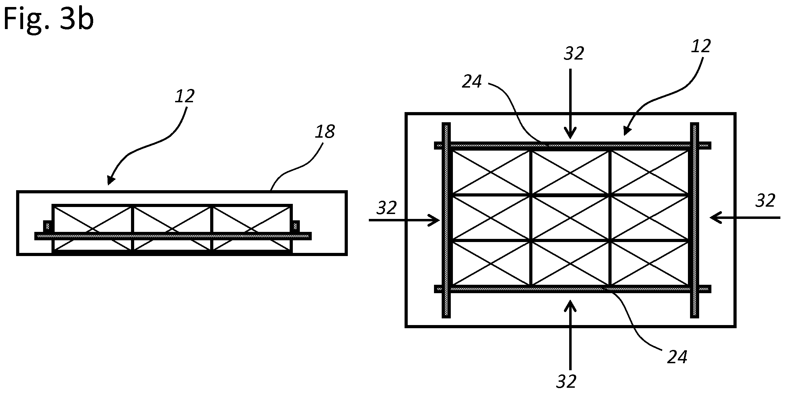

So verdeutlicht die Fig. 3a eine erste Prozessphase des Verfahrens, bei der eine vollständige Gebindelage 12 in vorgruppiertem, aber noch nicht zentrierten Zustand von einer Förderstrecke oder einer Bereitstellungsposition (z.B. einer hier nicht dargestellten Übergabestation) in eine Beladeeinrichtung 18 aufgenommen wurde. Wie oben erwähnt, kann die hier nur schematisch angedeutete Beladeeinrichtung 18 bspw. durch einen höhenverstellbaren und/oder schwenkbaren und ortsveränderlichen Jalousiegreiferkopf oder einen Plattengreiferkopf o. dgl. gebildet sein, der einen öffnen- und schließbaren Boden aufweist, auf dem die vorgruppierte und noch nicht zentrierte Gebindelage 12 abgelegt sein kann, bspw. durch seitliches horizontales Einschieben in die Beladeeinrichtung 18 in Pfeilrichtung 28 von links. Wie die schematische Seitenansicht der Fig. 1 (links) und die schematische Draufsicht (rechts) verdeutlicht, befinden sich zwischen den einzelnen Gebinden 26 der geordneten Gebindelage 12 jeweils Lücken 30, die noch nicht geschlossen sind. Die zum Schließen dieser Lücken 30 verwendete Zentriereinrichtung 20, die in der Beladeeinrichtung 18 baulich integriert ist, umfasst im gezeigten Ausführungsbeispiel insgesamt vier Zentrier- oder Schubleisten 24, die paarweise gegenüber liegend an den Längs- und Schmalseiten der Beladeeinrichtung 18 und damit an den Au ßenseiten der aufgenommenen Gebindelage 12 angeordnet sind. Bei Zustellbewegungen 32 werden jeweils die paarweise gegenüber liegenden Leisten 24 in weitgehend synchronen Horizontalschubbewegungen gegeneinander geschoben, bspw. mit Hilfe von elektromotorischen Antrieben, von hydraulischen oder pneumatischen Antrieben oder auf sonstige Weise (vgl. Fig. 3b).

Die Fig. 3b zeigt eine nachfolgende Prozessphase, bei der die von der Beladeeinrichtung 18 aufgenommene und dort befindliche bzw. auf ihrem beweglichen Roll- oder Plattenboden (nicht dargestellt) befindliche Gebindelage 12 durch seitliche Zustell- und/oder Schiebebewegungen 32 der an allen vier Seiten angreifenden Zentrier- oder Schubleisten 24 vorzentriert werden. Eventuell vorhandene Lücken 30 (Fig. 3a) werden dadurch geschlossen; die Gebindelage 12 wird innerhalb der Beladeeinrichtung 18 in eine geschlossene, exakt rechteckförmige oder quadratische Formation mit definiert langen Längs- und Schmalseiten gebracht, was durch die Zustellbewegungen 32 angedeutet ist, die durch die jeweiligen Zentrier- oder Schubleisten 24 auf die Gebindelage 12 aufgebracht werden.

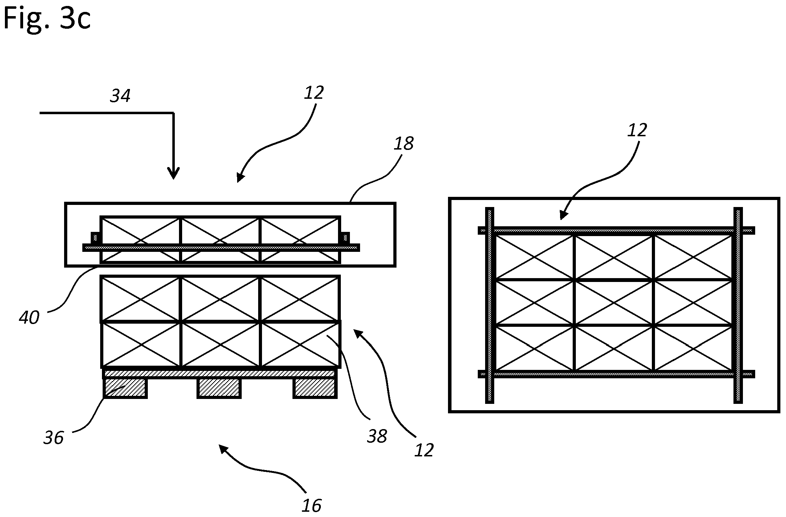

Die Fig. 3c zeigt eine sich an die Vorzentrierung (Fig. 3b) anschließende Prozessphase, bei welcher die Beladeeinrichtung 18 in einer Hub- und/oder Verschiebebewegung 34 zu einem vorgesehenen Ablageplatz 16 bewegt wird, an dem die in der Beladeeinrichtung 18 beförderte Gebindelage 12 gestapelt werden soll. Die Beladeeinrichtung 18 befindet sich in der Darstellung der Fig. 3c in ihrer vorgesehenen Abgabeposition, bei der die in der Beladeeinrichtung 18 befindliche Gebindelage 12 möglichst exakt oberhalb einer Palette 36 bzw. eines bereits darauf befindlichen Stapels 38 mit einer dort abgelegten Gebindelage 12 oder mit mehreren dort übereinander gestapelten Gebindelagen 12 positioniert wird, um durch Öffnen des Roll- oder Plattenbodens 40 die Gebindelage 12 freizugeben und nach unten abgeben zu können.

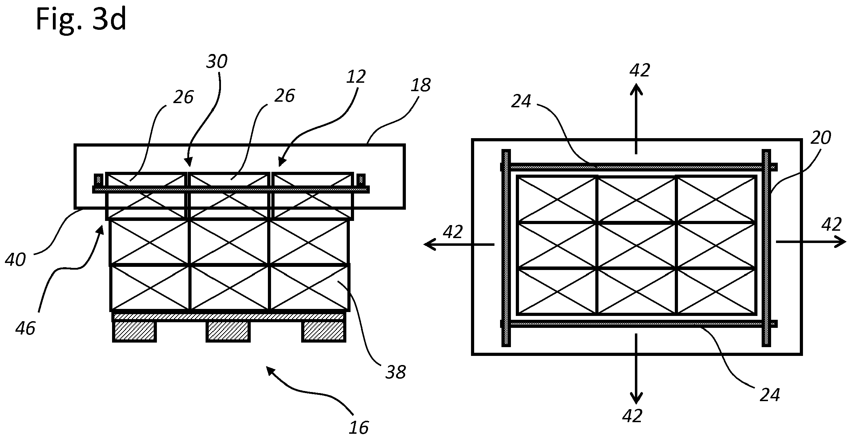

Um allerdings diesen Freigabevorgang für die Gebindelage 12 einleiten zu können, können die Zentriereinrichtungen 20 wahlweise zumindest leicht geöffnet werden, was in der Fig. 3d schematisch durch Pfeile 42 angedeutet ist, welche die Öffnungs- bzw. Freigabebewegungen der jeweiligen Zentrier- oder Schubleisten 24 der Zentriereinrichtung 20 charakterisieren. Wahlweise können diese Öffnungs- oder Freigabebewegungen 42 der Zentriereinrichtung 20 ungefähr gleichzeitig mit der Öffnungsbewegung des Rollen- oder Plattenbodens 40 der Beladeeinrichtung 18 erfolgen. Auch zeitversetzte Bewegungen der Elemente 24 und 40 sind möglich. Allerdings sind die in Fig. 3d angedeuteten Öffnungsbewegungen 42 der Zentriereinrichtungen 20 nicht zwingend erforderlich. So sind auch Ablageverfahren sinnvoll, bei denen die Zentriereinrichtungen 20 nicht geöffnet werden, sondern beim Nachzentrieren sogar noch etwas weiter zusammengefahren werden, was auch als Überdrücken bezeichnet werden kann. Ggf. können die einzelnen Gebinde 26 der auf der Oberseite des Stapels 38 abgelegten Gebindelage 12 bei diesem Ablagevorgang leicht auseinander springen, so dass wieder kleinere Lücken 30 zwischen den einzelnen Gebinden 26 oder den Gebindereihen und -spalten entstehen. Aus diesem Grund sieht das Verfahren ein Nachzentrieren der Gebinde 26 oder Stückgüter der auf dem Ablage- oder Stapelplatz 16 bzw. auf dem Stapel 38 abgelegten Gebinde- oder Stückgutlage 12 vor.

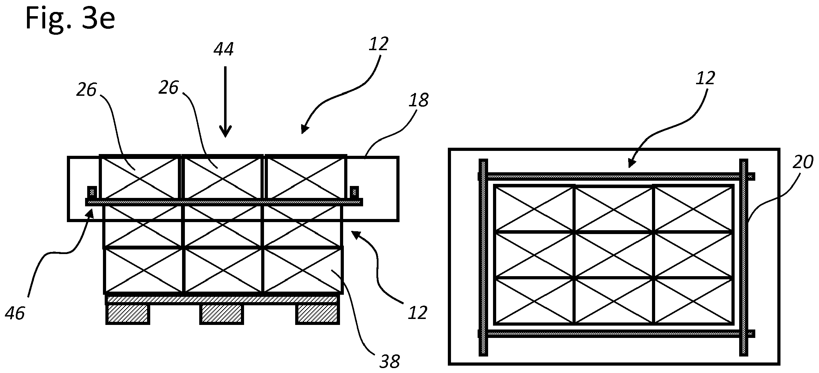

Um das Nachzentrieren zu ermöglichen, wird die Beladeeinrichtung 18 gemäß Fig. 3e mit geöffneter Zentriereinrichtung 20 so positioniert, dass die Lage 12 nachzentriert werden kann. Das in Fig. 3e gezeigte Ausführungsbeispiel zeigt ein Absenken 44 der Beladeeinrichtung 18 um einen geringen Betrag, bis die Zentrier- oder Schubleisten 24 exakt auf einen horizontalen Stoß 46 zwischen der zuoberst auf dem Stapel 38 befindlichen Lage 12 und der soeben abgelegten Gebindelage 12 (vgl. Fig. 3d) ausgerichtet sind. In diesem Fall können diese beiden Lagen 12 gleichzeitig nachzentriert werden. Sofern nur die zuletzt auf dem Stapel 38 abgelegte Gebindelage 12 nachzentriert werden soll, kann die Beladeeinrichtung 18 auch etwas höher positioniert werden; in diesem Fall kann auf den Absenkvorgang 44 ggf. verzichtet werden. Wenn allerdings Gebinde 26 zu zentrieren sind, die mit den Oberseiten der bereits abgelegten Gebindelage 12 in eine formschlüssige Verbindung gebracht werden sollen, bspw. durch Verrasten, so ist der Nachzentriervorgang entsprechend Fig. 3e zu bevorzugen, da nur auf diese Weise zuverlässig gewährleistet werden kann, dass die Gebinde 26 an der Stoßstelle 46 miteinander in formschlüssigen Eingriff gebracht werden können.

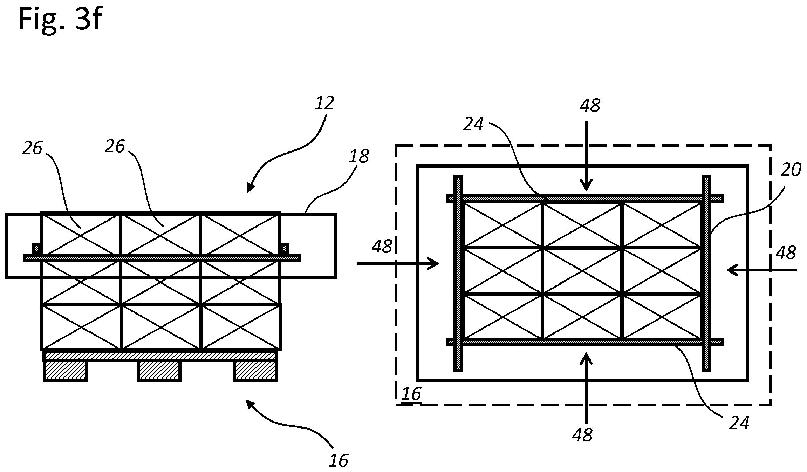

Das eigentliche Nachzentrieren erfolgt gemäß Fig. 3f durch erneute seitliche Zustell- und/oder Schiebebewegungen 48 der innerhalb der Beladeeinrichtung 18 angeordneten Schubelemente 24, wodurch die auf dem Ablageplatz 16 abgelegte(n) Gebindelage(n) in eine definierte Position auf dem Ablageplatz 16 und exakt gegenüber einer zuvor gestapelten Gebinde- oder Stückgutlage ausgerichtet werden können. Je nach Kontur der Ober- und Unterseiten der Gebinde 26 der Gebindelagen 12 können diese durch das Nachzentrieren 48 miteinander verrastet werden.

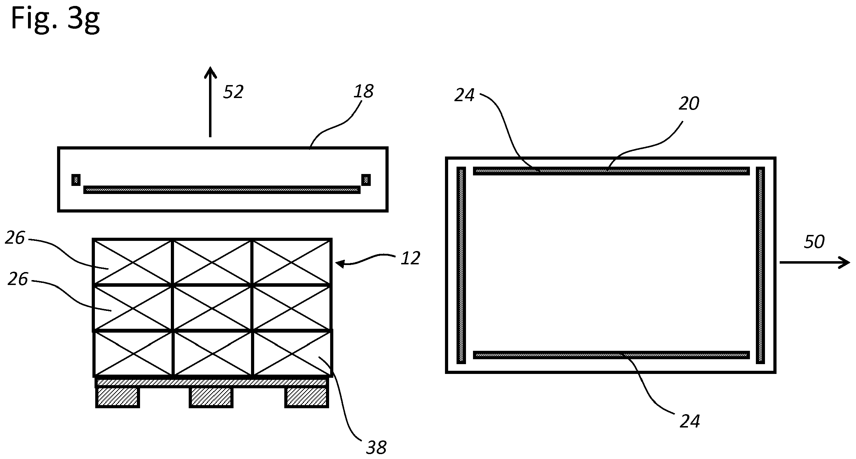

Nach dem Öffnen der Zentriereinrichtung 20, was durch Öffnungsbewegungen 50 der Zentrier- oder Schubleisten 24 angedeutet ist, kann die Beladeeinrichtung 18 vom Stapel 38 abgehoben werden, was durch den Pfeil 52 in Fig. 3g angedeutet ist, der den Abhebevorgang der Beladeeinrichtung 18 nach erfolgter Nachzentrierung 48 (vgl. Fig. 3f) charakterisiert.

Das in seinen einzelnen Schritten oder Prozessphasen gezeigte Verfahren dient dem passgenauen und exakt übereinander fluchtenden Stapeln und/oder Palettieren von Gebinde- oder Stückgutlagen 12, die mit Hilfe des Verfahrens lückenlos und ohne seitlichen Versatz übereinander gestapelt bzw. palettiert werden können. Auf diese Weise können die Gebinde 26 oder Stückgüter der mittels der Beladeeinrichtung 18 abgelegten Gebinde- oder Stückgutlage 12 beim Nachzentrieren 48 in eine weitgehend exakte vertikale Fluchtung mit einer vorher abgelegten oder nachfolgenden Gebinde- oder Stückgutlage bzw. mit dem Stapel 38 gebracht und bspw. mit einer vorher abgelegten Gebinde- oder Stückgutlage verrastet und in formschlüssigen Eingriff gebracht werden. Wenn somit im vorliegenden Zusammenhang von einem Verrasten aufeinander gestapelter Gebinde- oder Stückgutlagen12 die Rede ist, so ist damit eine formschlüssige Passung in vertikaler Richtung gemeint, welche die aufeinander gestapelten Gebinde 26 oder Stückgüter an einem Verrutschen in horizontaler Richtung hindern kann. Beispiele hierfür sind Getränkekästen, die aufeinander gestapelt werden können und hierbei fluchtend und in formschlüssiger Verbindung mit ihren Unterseiten in eine rahmenartige Oberseite eines darunter befindlichen Kastens einrasten können, so dass eine stabile Stapelung erreicht werden kann.

Der besondere Vorteil der Erfindung besteht u.a. darin, dass keine zusätzliche Zentrierung außerhalb der Beladestation 18 mehr benötigt wird. Auch können sortenabhängige Einstellungen entfallen, wenn die Zentrierungen 20 der Beladestation 18 mit geeigneten Antrieben angesteuert werden. Die Bauform der Beladeeinrichtung 18 kann gegenüber bekannten Beladestationen kompakter ausfallen. Kollisionen mit dem Palettentransport oder anderen Baugruppen können verhindert werden. Auch können mit solchen Beladeeinrichtungen bzw. mit Hilfe des erfindungsgemäßen Verfahrens solche Produkte verarbeitet werden, die nachzentriert werden müssen, ohne dass hierdurch ein bedeutender Mehraufwand verursacht würde.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Stapel-/Palettiervorrichtung, Vorrichtung
- 12: Gebindelage, Stückgutlage, Lage
- 14: Übergabestation
- 16: Ablageplatz
- 18: Beladeeinrichtung
- 20: Zentriereinrichtung
- 22: Steuereinrichtung
- 24: Zentrierleisten, Schubleisten
- 26: Gebinde
- 28: Einschubrichtung
- 30: Lücken
- 32: Zustellbewegung, Schiebebewegung
- 34: Hubbewegung, Verschiebebewegung
- 36: Palette
- 38: Stapel
- 40: Rollboden, Plattenboden
- 42: Öffnungsbewegung, Freigabebewegung
- 44: Absenkvorgang, Absenkbewegung
- 46: Stoß, Stoßstelle
- 48: Nachzentrieren, Nachzentrierbewegung
- 50: Öffnen, Öffnungsbewegung
- 52: Abhebevorgang, Abhebebewegung

- S1: erster Verfahrensschritt
- S2: zweiter Verfahrensschritt
- S3: dritter Verfahrensschritt
- S4: vierter Verfahrensschritt

## Patentansprüche

1. Verfahren zum Stapeln und/oder Palettieren von Gebinde- oder Stückgutlagen (12), bei dem vollständige Lagen (12) nacheinander von einer Förderstrecke und/oder einer Übergabestation (14) mittels eines zwischen der Förderstrecke und/oder der Übergabestation (14) und einem Ablageplatz (16) beweglich angeordneten Jalousie- oder Plattengreiferkopfes (18) aufgenommen und durch seitliche Zustell- und/oder Schiebebewegungen (32) vorzentriert und anschließend auf dem vorgesehenen Ablageplatz (16) gestapelt werden, wonach die auf dem Ablageplatz (16) abgelegte(n) eine oder mehrere übereinander befindliche vollständige Lage(n) (12) durch erneute seitliche Zustell- und/oder Schiebebewegungen (32) von innerhalb des Jalousie- oder Plattengreiferkopfes (18) angeordneten Schubelementen in eine definierte Position auf dem Ablageplatz (16) und/oder zur Positionierung gegenüber einer zuvor gestapelten Gebinde- oder Stückgutlage (12) aneinander geschoben und nachzentriert werden, wobei die Vor- und Nachzentrierung mittels einer Steuereinrichtung (22) in Abhängigkeit von den jeweiligen Positionen des Jalousie- oder Plattengreiferkopfes (18) erfolgt, und wobei die Gebinde (26) oder Stückgüter einer mittels des Jalousie- oder Plattengreiferkopfes (18) abgelegten Gebinde- oder Stückgutlage (12) beim Nachzentrieren mit einer vorher abgelegten Gebinde- oder Stückgutlage (12) verrastet werden, **dadurch gekennzeichnet, dass** in einer sich an die Vorzentrierung anschließenden Prozessphase der Jalousie- oder Plattengreiferkopf (18) in einer Hub- und/oder Verschiebebewegung (34) zu dem vorgesehenen Ablageplatz (16) bewegt wird.

2. Verfahren nach Anspruch 1, bei dem die Gebinde (26) oder Stückgüter einer mittels des Jalousie- oder Plattengreiferkopfes (18) abgelegten Gebinde- oder Stückgutlage (12) beim Nachzentrieren annähernd lückenlos aneinander geschoben werden.

3. Verfahren nach Anspruch 1 oder 2, bei dem die Gebinde (26) oder Stückgüter einer mittels des Jalousie- oder Plattengreiferkopfes (18) abgelegten Gebinde- oder Stückgutlage (12) beim Nachzentrieren in eine weitgehend exakte vertikale Fluchtung mit einer vorher abgelegten oder nachfolgenden Gebinde- oder Stückgutlage (12) gebracht werden.

4. Verfahren nach einem der Ansprüche 1 bis 3, bei dem die Gebinde (26) oder Stückgüter einer mittels des Jalousie- oder Plattengreiferkopfes (18) abgelegten Gebinde- oder Stückgutlage (12) sowie eine darunter befindliche, zuvor abgelegte Gebinde- oder Stückgutlage (12) beim Nachzentrieren gemeinsam beaufschlagt, annähernd lückenlos aneinander geschoben, in eine weitgehend exakte vertikale Fluchtung gebracht und/oder mit der zuvor abgelegten Gebinde- oder Stückgutlage (12) verrastet werden.

5. Verfahren nach einem der Ansprüche 1 bis 4, bei dem der Jalousie- oder Plattengreiferkopf (18) vor dem Nachzentrieren zumindest soweit abgesenkt wird, dass die mittels des Jalousie- oder Plattengreiferkopfes (18) abgelegte Gebinde- oder Stückgutlage (12) mit den nachzentrierenden Zentrier- oder Schubleisten (24) an ihrem unteren seitlichen Rand oder in einem unteren Drittel ihrer Gesamthöhe erfasst wird.

6. Verfahren nach einem der Ansprüche 1 bis 5, bei dem die im Jalousie- oder Plattengreiferkopf (18) angeordneten Schubelemente durch paarweise gegeneinander zustellbare Zentrier- oder Schubleisten (24) gebildet sind, wobei jeweils zwei Paare von gegeneinander zustellbaren Zentrier- oder Schubleisten (24) vorgesehen sind, die zum Nachzentrieren jeweils gleichzeitig oder zeitversetzt gegeneinander zugestellt werden.

7. Verfahren nach einem der Ansprüche 1 bis 6, bei dem die zu befördernden Gebinde- oder Stückgutlagen (12) seitlich in den Jalousie- oder Plattengreiferkopf (18) eingeschoben und durch einen sich öffnenden Boden (40) nach unten abgelegt werden, und der Jalousie- oder Plattengreiferkopf (18) zwischen der Förderstrecke und/oder der Übergabestation (14) und dem Ablageplatz (16) bewegt wird.

## Claims

1. A method for stacking and/or palletising bundle layers or piece good layers (12), in which completed layers (12) are successively received by a conveyor line and/or transfer station (14) by means of a shutter-type gripper head or panel gripper head (18) that is movably arranged between the conveyor line and/or transfer station (14) and a depositing location (16), are precentred by lateral advancing movements and/or sliding movements (32) and are subsequently stacked on the provided depositing location (16), whereupon the one or more completed layer or layers (12) located on top of each other and deposited on the depositing location (16) are pushed together and recentred into a specified position on the depositing location (16) and/or for positioning in relation to a previously stacked bundle layer or piece good layer (12) by repeated lateral advancing movements and/or sliding movements (32) of sliding elements arranged within the shutter-type gripper head or panel gripper head (18), wherein the precentring and the recentring is carried out by means of a control device (22) based on the particular positions of the shutter-type gripper head or panel gripper head (18), and wherein the bundles (26) or piece goods of a bundle layer or piece good layer (12) deposited by means of the shutter-type gripper head or panel gripper head (18) are interlocked during recentring with a previously deposited bundle layer or piece good layer (12), **characterised in that** the shutter-type gripper head or panel gripper head (18) is moved during a process phase subsequent to the precentring to the provided depositing location (16) in a lifting movement and/or shifting movement (34).

2. The method as recited in claim 1 in which the bundles (26) or piece goods of a bundle layer or piece good layer (12) deposited by means of the shutter-type gripper head or panel gripper head (18) are pushed together approximately without gaps during recentring.

3. The method as recited in claim 1 or 2 in which the bundles (26) or piece goods of a bundle layer or piece good layer (12) deposited by means of the shutter-type gripper head or panel gripper head (18) are brought into a largely precise vertical alignment with a previously deposited or with a subsequent bundle layer or piece good layer (12) during recentring.

4. The method as recited in one of the claims 1 to 3 in which the bundles (26) or piece goods of a bundle layer or piece good layer (12) deposited by means of the shutter-type gripper head or panel gripper head (18) as well as a previously deposited bundle layer or piece good layer (12) located therebeneath, are acted upon jointly, pushed together approximately without gaps, brought into a largely precise vertical alignment and/or interlocked with the previously deposited bundle layer or piece good layer (12) during recentring.

5. The method as recited in one of the claims 1 to 4 in which the shutter-type gripper head or panel gripper head (18) is lowered prior to the recentring at least so far that the bundle layer or piece good layer (12) deposited by means of the shutter-type gripper head or panel gripper head (18) is engaged by the recentring centring bars or sliding bars (24) at its lower lateral edge or in a lower third of its total height.

6. The method as recited in one of the claims 1 to 5 in which the sliding elements arranged in the shutter-type gripper head or in the panel gripper head (18) are formed by centring bars or sliding bars (24) that are advanceable pairwise toward each other, wherein in each case two pairs of centring bars or sliding bars (24) that are advanceable toward each other are provided, which are in each case advanced toward each other for recentring simultaneously or in a time-delayed manner.

7. The method as recited in one of the claims 1 to 6 in which the bundle layers or piece good layers (12) to be conveyed are inserted laterally into the shutter-type gripper head or into the panel gripper head (18) and deposited downward through a base (40) opening up, and the shutter-type gripper head or panel gripper head (18) is moved between the conveyor line and/or transfer station (14) and the depositing location (16).

## Revendications

1. Procédé d'empilement et/ou de palettisation de couches de multipacks ou de produits de détail (12), dans lequel des couches (12) complètes sont prises les unes après les autres depuis un trajet de transport et/ou un poste de transfert (14), au moyen d'une tête de préhension à jalousie ou à plaque (18) disposée de manière mobile entre ledit trajet de transport et/ou le poste de transfert (14) et un emplacement de dépôt (16), et sont centrées préalablement par des mouvements latéraux d'avance et/ou coulissants (32) et sont ensuite empilées sur l'emplacement de dépôt (16) prévu, ce après quoi ladite une ou plusieurs couche(s) (12) complète(s) superposées déposée(s) sur l'emplacement de dépôt (16) sont poussées les unes contre les autres et centrées ultérieurement dans une position définie sur l'emplacement de dépôt (16) et/ou pour le positionnement par rapport à une couche de multipacks ou de produits de détail (12) empilée auparavant, par de nouveaux mouvements latéraux d'avance et/ou coulissants (32) au moyen d'éléments de poussée disposés à l'intérieur de la tête de préhension à jalousie ou à plaque (18), dans lequel le centrage préalable et ultérieur se fait au moyen d'un dispositif de commande (22) en fonction des positions respectives de la tête de préhension à jalousie ou à plaque (18), et dans lequel les multipacks (26) ou produits de détail d'une couche de multipacks ou de produits de détail (12) déposée au moyen de la tête de préhension à jalousie ou à plaque (18) sont enclenchés, lors du centrage ultérieur, avec une couche de multipacks ou de produits de détail (12) déposée auparavant, **caractérisé par le fait que**, dans une phase de processus qui suit le centrage préalable, la tête de préhension à jalousie ou à plaque (18) est déplacée en un mouvement de levage et/ou de déplacement (34) vers l'emplacement de dépôt (16) prévu.

2. Procédé selon la revendication 1, dans lequel, lors du centrage ultérieur, les multipacks (26) ou produits de détail d'une couche de multipacks ou de produits de détail (12) déposée au moyen de ladite tête de préhension à jalousie ou à plaque (18) sont poussés les uns contre les autres à peu près sans lacunes.

3. Procédé selon la revendication 1 ou 2, dans lequel, lors du centrage ultérieur, les multipacks (26) ou produits de détail d'une couche de multipacks ou de produits de détail (12) déposée au moyen de ladite tête de préhension à jalousie ou à plaque (18) sont placés de manière à être alignés dans une large mesure exactement verticalement avec une couche de multipacks ou de produits de détail (12) déposée auparavant ou suivante.

4. Procédé selon l'une quelconque des revendications 1 à 3, dans lequel, lors du centrage ultérieur, les multipacks (26) ou produits de détail d'une couche de multipacks ou de produits de détail (12) déposée au moyen de ladite tête de préhension à jalousie ou à plaque (18) ainsi qu'une couche de multipacks ou de produits de détail (12) déposée auparavant et située là-dessous sont sollicités en commun, sont poussés les uns contre les autres à peu près sans lacunes, sont placés de manière à être alignés dans une large mesure exactement verticalement et/ou sont enclenchés avec la couche de multipacks ou de produits de détail (12) déposée auparavant.

5. Procédé selon l'une quelconque des revendications 1 à 4, dans lequel la tête de préhension à jalousie ou à plaque (18) est descendue, avant le centrage ultérieur, au moins de telle manière que la couche de multipacks ou de produits de détail (12) déposée au moyen de ladite tête de préhension à jalousie ou à plaque (18) est saisie au moyen des barrettes de centrage ou de poussée (24) effectuant le centrage ultérieur, sur leur bord latéral inférieur ou dans un tiers inférieur de leur hauteur totale.

6. Procédé selon l'une quelconque des revendications 1 à 5, dans lequel les éléments de poussée disposés dans la tête de préhension à jalousie ou à plaque (18) sont constitués par des barrettes de centrage ou de poussée (24) aptes à être avancées par paires les unes contre les autres, dans lequel respectivement deux paires de barrettes de centrage ou de poussée (24) aptes à être avancées les unes contre les autres sont prévues qui, pour le centrage ultérieur, sont avancées les unes contre les autres respectivement en même temps ou en différé.

7. Procédé selon l'une quelconque des revendications 1 à 6, dans lequel les couches de multipacks ou de produits de détail (12) à transporter sont poussées latéralement dans la tête de préhension à jalousie ou à plaque (18) et sont déposées vers le bas à travers un fond (40) s'ouvrant, et la tête de préhension à jalousie ou à plaque (18) est déplacée entre le trajet de transport et/ou le poste de transfert (14) et l'emplacement de dépôt (16).
